# EUROPÄISCHE PATENTSCHRIFT

(11) **EP 3 737 778 B1**
(45) Veröffentlichungstag und Bekanntmachung des Hinweises auf die Patenterteilung: **16.03.2022**
(21) Anmeldenummer: 18815994.1
(22) Anmeldetag: 05.12.2018
(51) Int. Cl.: C22C 38/02, C22C 38/04, C22C 38/08, C22C 38/18, C22C 38/22, C22C 38/24, C22C 38/34, C22C 38/36, C22C 38/38, C21D 1/20, H01M 8/04082

(54) **VERWENDUNG EINES BAUTEILS ZUM KONTAKTIEREN VON WASSERSTOFF**
USE OF A COMPONENT FOR CONTACTING HYDROGEN
UTILISATION D'UN ÉLÉMENT DESTINÉ À ÊTRE MIS EN CONTACT AVEC DE L'HYDROGÈNE

(30) Priorität: 11.01.2018 DE 102018200343
(43) Veröffentlichungstag der Anmeldung: 18.11.2020
(73) Patentinhaber: Robert Bosch GmbH, 70442 Stuttgart (DE)
(72) Erfinder: KUNTZ, Matthias, 70182 Stuttgart (DE)
(86) Internationale Anmeldenummer: PCT/EP2018/083604
(87) Internationale Veröffentlichungsnummer: WO 2019/137698

(56) Entgegenhaltungen:
- EP-A1- 1 200 638
- DE-A1-102012 219 061
- SOURMAIL T ET AL: "Evaluation of potential of high Si high C steel nanostructured bainite for wear and fatigue applications", MATERIALS SCIENCE AND TECHNOLOGY, Bd. 29, Nr. 10, Oktober 2013 (2013-10), Seiten 1166-1173, XP002788161, INSTITUTE OF MATERIALS UK ISSN: 0267-0836

## Beschreibung

Die vorliegende Erfindung betrifft die Verwendung eines Bauteils zum Herstellen eines Brennstoffzellensystems, wobei das Bauteil geeignet und dazu vorgesehen ist, mit Wasserstoff in Kontakt zu sein.

### Stand der Technik

Oftmals ist es erforderlich beziehungsweise erwünscht, dass Bauteile mit einer hohen mechanischen Stabilität ausgestaltet sind. Zusätzlich zu einer derartigen hohen mechanischen Stabilität kann oftmals eine Medienbeständigkeit von Vorteil sein. Diesbezüglich sind an dieser Stelle Bauteile zu nennen, welche eine hohe mechanische Stabilität aufweisen sollen und zusätzlich dauerhaft einem hohen Wasserstoffdruck standhalten sollen.

Das Dokument DE 10 2012 219 061 A1, beispielsweise, beschreibt ein Brennstoffzellensystem mit einem Wasserstoffdrucktank, aus dem Wasserstoff zur Versorgung zumindest einer Anode des Brennstoffzellensystems entnehmbar ist, wobei der Wasserstofftankdruck mittels eines Druckminderers auf einen Eingangsdruck abgesenkt und mittels eines Druckregelventils auf den Anodendruck geregelt wird, wobei der Druckminderer einen Federraum mit einem federbelasteten und mittels des im Federraum herrschenden Drucks druckbelasteten Ventilkoben aufweist.

Ferner beschreibt das Dokument DE 600 28 979 T2 ohne irgendeinen Bezug zu Wasserstoff hochgekohlten Stahl mit guten Eigenschaften bezüglich Festigkeit, Härte und Widerstandsfähigkeit gegenüber Wärmebehandlungen. Dieses Dokument betrifft ferner ein Verfahren zum Herstellen derartiger Stähle.

Ähnliche Stähle sind ferner bekannt aus Sourmail et al., Evaluation of potential of high Si high C steel nanostructured bainite for wear and fatigue applications, Materials Science and Technology, 2013, Vol 29: 1166-1173.

Aus der WO 01/11096 A1 ist ein bainitischer Stahl bekannt.

### Offenbarung der Erfindung

Die vorliegende Erfindung betrifft die Verwendung eines Bauteils zum Herstellen eines Brennstoffzellensystems. Das Bauteil zum Kontaktieren von Wasserstoff weist wenigstens eine Oberfläche auf, die dazu vorgesehen ist, mit einer Wasserstoffatmosphäre in Kontakt zu kommen, wobei zumindest diese Oberfläche aus Stahl ausgebildet ist, wobei der Stahl eine Gefügestruktur aufweist, die Austenit und Ferrit umfasst, wobei ein austenitischer Gefügeanteil in einem Bereich von größer oder gleich 1 Gew.-% bis kleiner oder gleich 50 Gew.-%, vorliegt, und wobei ein ferritischer Gefügeanteil in einem Bereich von größer oder gleich 50 Gew.-% bis kleiner oder gleich 99 Gew.-% vorliegt.

Ein vorbeschriebenes Bauteil erlaubt auf vorteilhafte Weise eine hohe mechanische Stabilität und ist dabei langzeitstabil auch gegen hohe Wasserstoffdrücke.

Somit beschreibt die vorliegende Erfindung die Verwendung eines Bauteils zum Herstellen eines Brennstoffzellensystems und damit ein Bauteil, welches dazu vorgesehen und ausgebildet ist, mit Wasserstoff beziehungsweise einer Wasserstoffatmosphäre in Kontakt zu kommen. Grundsätzlich ist das Bauteil bezüglich seiner Ausgestaltung und seiner spezifischen Anwendung nicht beschränkt, jedoch kann das Bauteil grundsätzlich dazu vorgesehen sein, mit einem Wasserstoffüberdruck von gleich oder mehr als 2bar, beispielsweise gleich oder mehr als 25bar, etwa gleich oder mehr als 50 bar, besonders bevorzugt gleich oder mehr als 100 bar oder auch gleich oder mehr als 500bar in Kontakt zu kommen. Die Obergrenze für den Wasserstoffdruck kann bauteilbedingt sein und beispielsweise bei 5bar, 30bar, 120bar oder auch bei 1000 bar liegen.

Es kann weiterhin von Vorteil sein, dass das Bauteil zumindest teilweise unmittelbar in Kontakt mit elementarem Wasserstoff steht. Entsprechend weist das Bauteil wenigstens eine Oberfläche auf, die dazu vorgesehen und ausgestaltet ist, dass diese mit einer Wasserstoffatmosphäre in Kontakt kommt. Unter einer Wasserstoffatmosphäre kann dabei insbesondere eine Atmosphäre beziehungsweise ein Gas verstanden werden, in welcher beziehungsweise in welchem elementarer Wasserstoff in einem Anteil von größer oder gleich 50 Gew.-%, beispielsweise von größer oder gleich 75 Gew.-%, etwa von größer oder gleich 90 Gew.-%, beispielsweise von größer oder gleich 95 Gew.-%, vorliegt. Somit kann die Wasserstoffatmosphäre etwa reiner elementarer Wasserstoff sein, der eine herstellungsbedingte Reinheit aufweist.

Bezüglich des Bauteils ist es ferner vorgesehen, dass dieses zumindest an der Oberfläche, welche wie vorstehend beschrieben dazu vorgesehen ist, dass diese mit einer Wasserstoffatmosphäre in Kontakt kommt, aus Stahl ausgebildet ist. Durch das Vorsehen von Stahl an dieser Oberfläche, kann grundsätzlich eine hohe mechanische Stabilität ermöglicht werden. Diese mechanische Stabilität kann besonders hoch sein, wenn etwa das gesamte Bauteil aus Stahl geformt ist was eine grundsätzliche Stabilität auch bei hohen Drücken ermöglicht.

Um gleichermaßen eine hohe Beständigkeit gegenüber Wasserstoff zu ermöglichen ist es ferner vorgesehen, dass der Stahl eine Gefügestruktur aufweist, die Austenit und Ferrit aufweist. Bezüglich der Gefügestruktur ist es dabei im Detail vorgesehen, dass ein austenitischer Gefügeanteil in einem Bereich von größer oder gleich 1 Gew.-% bis kleiner oder gleich 50 Gew.-%, beispielsweise in einem Bereich von größer oder gleich 1 Gew.-% bis kleiner oder gleich 35 Gew.-%, etwa in einem Bereich von größer oder gleich 3 Gew.-% bis kleiner oder gleich 15 Gew.-%, vorliegt, und wobei ein ferritischer Gefügeanteil in einem Bereich von größer oder gleich 50 Gew.-% bis kleiner oder gleich 99 Gew.-%, beispielsweise in einem Bereich von größer oder gleich 65 Gew.-% bis kleiner oder gleich 99 Gew.-%, etwa in einem Bereich von größer oder gleich 85 Gew.-% bis kleiner oder gleich 97 Gew.-%, vorliegt.

Dabei kann die Gefügestruktur bevorzugt aus Ferrit und Austenit bestehen, indem bei einer Bainitisierung, wie diese nachstehend beschrieben ist, eine Umwandlung zu Ferrit erfolgt und der Rest verbleibendes Austenit ist. In anderen Worten können sich die zuvor genannten Bereiche von Austenit und Ferrit zu 100 Gew.-% addieren.

In überraschender Weise hat sich herausgestellt, dass ein Stahl, der insbesondere eine derartige Gefügestruktur aufweisend Austenit und Ferrit in den vorbeschriebenen Anteilen aufweist, eine hohe mechanische Stabilität zeigt und dabei zusätzlich eine hohe Resistenz gegenüber Wasserstoff aufweist. Insbesondere kann sich die gute und ausgeprägte Resistenz gegenüber Wasserstoffeinwirkung dadurch zeigen, dass der Stahl und damit das Bauteil beziehungsweise zumindest die mit Wasserstoff in Kontakt tretende Oberfläche besonders resistent gegenüber einer Wasserstoffversprödung ist.

Somit können durch Verwendung eines derartigen Stahls insbesondere Bauteile geschaffen werden, die problemlos auch für lange Zeit dem Einfluss von Wasserstoff auch in hohen Drücken ausgesetzt sein können. Dadurch kann in vorteilhafter Weise eine hohe Langzeitstabilität bei einem Betreiben des Bauteils ermöglicht werden. Darüber hinaus können Leckagen des Wasserstoffs reduziert oder ganz verhindert werden, was einen signifikanten Sicherheitsgewinn ermöglicht, da gerade Wasserstoff, der in die Atmosphäre entweicht, gegebenenfalls bezüglich der Sicherheit nachteilig sein kann.

Ein vorbeschriebenes Gefüge kann insbesondere ein bainitsches Gefüge aufweisen. Wie dies grundsätzlich auf dem Gebiet bekannt ist, kann eine bainitische Struktur entstehen durch eine Wärmebehandlung von Kohlenstoffstahl durch isotherme Umwandlung oder kontinuierliche Abkühlung aus dem Austenit bei Temperaturen unterhalb der Perlit- bis hin zur Martensitbildung. Bestandteil des Bainits kann dabei insbesondere die ferritische Gefügestruktur sein, da Bainit aus einem Gemenge von Ferrit und Karbiden ausgebildet sein kann.

Bei Stählen mit C-Gehalten größer oder gleich 0,3 Gew%, insbesondere größer oder gleich 0,4 Gew%, beispielsweise größer oder gleich 0,5 Gew% und einem Si-Gehalt größer 0,5 Gew%, insbesondere größer oder gleich 0,9 Gew%, beispielsweise größer oder gleich 1,5 Gew%, bildet sich ein Bainit aus, der nicht aus Ferrit und Karbiden (Zementit) besteht, sondern aus Ferrit und Austenit. Das liegt daran, dass die Zementitbildung durch Silicium unterdrückt wird und sich dadurch Austenit bildet.

Ferner kann es vorgesehen sein, dass der Stahl carbidfrei ist, also kein Carbid aufweist. Dies kann die genannten Vorteile noch verstärken.

Erfindungsgemäß ist es vorgesehen, dass der Stahl Silizium in einem Gehalt von größer oder gleich 0,5 Gew.-% bis kleiner oder gleich 5,0 Gew.-%, insbesondere von größer oder gleich 1,5 Gew.-% bis kleiner oder gleich 3,0 Gew.-%, aufweist und dass der Stahl Kohlenstoff in einem Gehalt von größer oder gleich 0,3 Gew.-% bis kleiner oder gleich 2,0 Gew.-%, insbesondere von größer oder gleich 0,5 Gew.-% bis kleiner oder gleich 1,1 Gew.-%, aufweist. Insbesondere in dieser Ausgestaltung kann es ermöglicht werden, dass der Stahl eine hohe mechanische Stabilität mit einer hohen Resistenz gegen Wasserstoff, auch bei einer langen Exposition und/oder mit hohen Drücken, ermöglichen kann und ein gewünschtes Bainitisieren wie vorstehend beschrieben ablaufen kann.

Insbesondere ein vorbeschriebenes Material kann Zugfestigkeiten in einem Bereich von bis zu 2 GPa oder sogar darüber aufweisen und es können Bruchdehnungen von 20% oder sogar mehr erreicht werden. Daher kann ein Material insbesondere in dieser Ausgestaltung die vorstehend beschriebenen positiven Eigenschaften aufweisen.

Bezüglich des Stahls, aus welchem das gesamte Bauteil oder zumindest eine oder sämtliche mit Wasserstoff in Kontakt kommenden Oberflächen geformt sein kann, ist erfindungsgemäß vorgesehen, dass dieser eine Legierung aufweist beziehungsweise aus dieser besteht, welche die folgenden Bestandteile aufweist:
- Kohlenstoff in einem Bereich von größer oder gleich 0,3 Gew.-% bis kleiner oder gleich 2,0 Gew.-%;
- Silizium in einem Bereich von größer oder gleich 0,5 Gew.-% bis kleiner oder gleich 5,0 Gew.-%;
- Mangan in einem Bereich von größer oder gleich 0,25 Gew.-% bis kleiner oder gleich 4,0 Gew.-%;
- Chrom in einem Bereich von größer oder gleich 0,2 Gew.-% bis kleiner oder gleich 4,0 Gew.-%;
- Molybdän in einem Bereich von größer oder gleich 0 Gew.-% bis kleiner oder gleich 3,0 Gew.-%;
- Vanadium in einem Bereich von größer oder gleich 0 Gew.-% bis kleiner oder gleich 0,8 Gew.-%; wobei
der Rest durch Eisen und durch unvermeidliche Verunreinigungen gebildet ist.

Insbesondere können die unvermeidlichen Verunreinigungen von der Herstellung des Stahls herrühren und/oder in einem Anteil von kleiner oder gleich 5 Gew.-% vorliegen und/oder beispielsweise aber nicht beschränkt, Niob, Stickstoff, Sauerstoff, Kupfer oder Phosphor aufweisen.

Besonders bevorzugt kann es vorgesehen sein, dass der Stahl, aus welchem das gesamte Bauteil oder zumindest eine oder sämtliche mit Wasserstoff in Kontakt kommenden Oberflächen geformt sein kann, eine Legierung aufweist beziehungsweise aus dieser besteht, welche die folgenden Bestandteile aufweist:
- Kohlenstoff in einem Bereich von größer oder gleich 0,4 Gew.-% bis kleiner oder gleich 1,5 Gew.-%;
- Silizium in einem Bereich von größer oder gleich 0,9 Gew.-% bis kleiner oder gleich 3,5 Gew.-%;
- Mangan in einem Bereich von größer oder gleich 0,5 Gew.-% bis kleiner oder gleich 2,5 Gew.-%;
- Chrom in einem Bereich von größer oder gleich 0,3 Gew.-% bis kleiner oder gleich 3,0 Gew.-%;
- Molybdän in einem Bereich von größer oder gleich 0 Gew.-% bis kleiner oder gleich 2,5 Gew.-%;
- Vanadium in einem Bereich von größer oder gleich 0 Gew.-% bis kleiner oder gleich 0,5 Gew.-%; wobei
der Rest durch Eisen und durch unvermeidliche Verunreinigungen gebildet ist.

Insbesondere können die unvermeidlichen Verunreinigungen wiederum von der Herstellung des Stahls herrühren und/oder in einem Anteil von kleiner oder gleich 5 Gew.-% vorliegen und/oder beispielsweise aber nicht beschränkt, Niob, Stickstoff, Sauerstoff, Kupfer oder Phosphor aufweisen.

Beispielhaft kann es vorgesehen sein, dass der Stahl, aus welchem das gesamte Bauteil oder zumindest eine oder sämtliche mit Wasserstoff in Kontakt kommenden Oberflächen geformt sein kann, eine Legierung aufweist beziehungsweise aus dieser besteht, welche
die folgenden Bestandteile aufweist:
   - Kohlenstoff in einem Bereich von größer oder gleich 0,5 Gew.-% bis kleiner oder gleich 1,1 Gew.-%;
   - Silizium in einem Bereich von größer oder gleich 1,5 Gew.-% bis kleiner oder gleich 3,0 Gew.-%
   - Mangan in einem Bereich von größer oder gleich 0,7 Gew.-% bis kleiner oder gleich 1,4 Gew.-%;
   - Chrom in einem Bereich von größer oder gleich 0,4 Gew.-% bis kleiner oder gleich 2,5 Gew.-%;
   - Molybdän in einem Bereich von größer oder gleich 0 Gew.-% bis kleiner oder gleich 0,15 Gew.-%; wobei
der Rest durch Eisen und durch unvermeidliche Verunreinigungen gebildet ist.

Insbesondere können die unvermeidlichen Verunreinigungen wiederum von der Herstellung des Stahls herrühren und/oder in einem Anteil von kleiner oder gleich 5 Gew.-% vorliegen und/oder beispielsweise aber nicht beschränkt, Niob, Vanadium, Stickstoff, Sauerstoff, Kupfer oder Phosphor aufweisen.

Es hat sich in überraschender Weise gezeigt, dass der der Stahl, aus welchem das gesamte Bauteil oder zumindest eine oder sämtliche mit Wasserstoff in Kontakt kommenden Oberflächen geformt sein kann, wenn er eine Legierung aufweist beziehungsweise aus dieser besteht, welche die vorgenannten Bestandteile insbesondere in den vorgenannten Mengen aufweist, eine hohe mechanische Stabilität in Kombination mit einer guten Resistenz gegenüber Wasserstoff aufweist.

Ferner kann insbesondere bei den vorbeschriebenen Zusammensetzungen eine vorteilhafte Einstellbarkeit der vorstehend beschriebenen Gefügestruktur durch eine Temperaturbehandlung wie nachstehend beschrieben ermöglicht werden. Dabei kann insbesondere eine Bainitisierung in problemlos umsetzbaren Zeiträumen ermöglicht werden.

Beispielsweise kann das Bauteil ausgewählt sein aus einer Wasserstoff führenden Leitung, einem Wasserstoffdrucktank, einem Ventil und einem vorgenannten oder einem anderen Bauteil für ein Brennstoffzellensystem. Insbesondere bei derartigen Bauteilen ist eine hohe mechanische Stabilität in Kombination mit einer langzeitstabilen Resistenz gegenüber Wasserstoff von Vorteil beziehungsweise essentiell. Denn insbesondere derartige Bauteile sollten für einen verlässlichen Betrieb und ein besonders gutes Sicherheitsverhalten sicherstellen können, dass diese auch durch hohen Wasserstoffdruck weder mechanisch beschädigt noch durch den anliegenden Wasserstoff einer Versprödung unterliegen. Insbesondere bei derartigen Bauteilen kann die vorliegende Erfindung somit von Vorteil sein.

Die Erfindung betrifft die Verwendung eines Bauteils, wie dieses im Detail beschrieben ist, zum Herstellen eines Brennstoffzellensystems. Beispielsweise kann ein Bauteil hergestellt werden, das ausgewählt ist aus einer Wasserstoff führenden Leitung, einem Wasserstoffdrucktank, einem Ventil oder einem anderen Bauteil für ein Brennstoffzellensystem. Insbesondere bei den vorgenannten Bauteil eine und/oder einem Brennstoffzellensystem kann es für einen verlässlichen Betrieb und ein besonders gutes Sicherheitsverhalten von großer Wichtigkeit sein, dass diese auch durch hohen Wasserstoffdruck weder mechanisch beschädigt noch durch den anliegenden Wasserstoff einer Versprödung unterliegen.

Insbesondere bei derartigen Bauteilen kann es somit von Vorteil sein, dass dieses ausgebildet ist aus einem Stahl, wie dieser vorstehend beschrieben ist, da ein vorstehend beschriebener Stahl eine hohe mechanische Stabilität aufweist und gleichzeitig bezüglich keiner Wasserstoffversprödung unterliegt oder diese zumindest deutlich reduziert sein kann. Dadurch kann eine langzeitstabile mechanische Stabilität und gleichermaßen ein langzeitstabiles sicheres Arbeiten ermöglicht werden.

Die vorliegende Erfindung betrifft ferner die genannte Verwendung, bei der ein Verfahren zum Herstellen eines Bauteils zum Kontaktieren von Wasserstoff, aufweisend die Verfahrensschritte durchgeführt wird
a) Bereitstellen eines Werkstoffs aufweisend einen Stahl, der Silizium in einem Gehalt von größer oder gleich 0,5 Gew.-% bis kleiner oder gleich 5,0 Gew.-%, insbesondere von größer oder gleich 1,5 Gew.-% bis kleiner oder gleich 3,0 Gew.-%, aufweist, und der Kohlenstoff in einem Gehalt von größer oder gleich 0,3 Gew.-% bis kleiner oder gleich 2,0 Gew.-%, insbesondere von größer oder gleich 0,5 Gew.-% bis kleiner oder gleich 1,1 Gew.-%, aufweist;
b) gegebenenfalls Durchführen einer Homogenisierung des Werkstoffs; und
c) Bainitisieren des gegebenenfalls homogenisierten Werkstoffs, indem der Werkstoff einer Temperaturbehandlung in einem Bereich von größer oder gleich 190°C bis kleiner oder gleich 300°C für einen Zeitraum von wenigstens einer Woche unterworfen wird.

Das vorliegende Verfahren kann es in besonders positiver Weise erlauben, dass der Stahl ein bainitisches Gefüge erhält. Insbesondere kann durch das hier beschriebene Verfahren ein Stahl erzeugt werden, der eine Gefügestruktur aufweist, die Austenit und Ferrit umfasst, wobei ein austenitischer Gefügeanteil in einem Bereich von größer oder gleich 1 Gew.-% bis kleiner oder gleich 50 Gew.-%, vorliegt, und wobei ein ferritischer Gefügeanteil in einem Bereich von größer oder gleich 50 Gew.-% bis kleiner oder gleich 99 Gew.-% vorliegt.

Ein derartiger Stahl kann insbesondere dadurch erzeugt werden, dass der Werkstoff, der als Ausgangsprodukt für das hier beschriebene Verfahren in Verfahrensschritt a) bereitgestellt wird, Silizium und Kohlenstoff in den vorbeschriebenen Mengen aufweist und ferner insbesondere dadurch, dass ein Bainitisieren des gegebenenfalls homogenisierten Werkstoffs erfolgt, indem der Werkstoff einer Temperaturbehandlung in dem vorstehend beschriebenen Temperaturbereich unterzogen wird in Verfahrensschritt c).

Bezüglich Verfahrensschritt a) kann der Werkstoff beispielsweise Stahl in einem wählbaren Bereich aufweisen, oder kann der Werkstoff aus dem Stahl bestehen beziehungsweise kann der Werkstoff durch Stahl gebildet sein.

Bezüglich des Stahls, der in Verfahrensschritt a) bereitgestellt wird, kann es besonders vorteilhaft vorgesehen sein, dass dieser eine Legierung aufweist beziehungsweise aus dieser besteht, welche
die folgenden Bestandteile aufweist:
   - Kohlenstoff in einem Bereich von größer oder gleich 0,3 Gew.-% bis kleiner oder gleich 2,0 Gew.-%;
   - Silizium in einem Bereich von größer oder gleich 0,5 Gew.-% bis kleiner oder gleich 5,0 Gew.-%
   - Mangan in einem Bereich von größer oder gleich 0,25 Gew.-% bis kleiner oder gleich 4,0 Gew.-%;
   - Chrom in einem Bereich von größer oder gleich 0,2 Gew.-% bis kleiner oder gleich 4,0 Gew.-%;
   - Molybdän in einem Bereich von größer oder gleich 0 Gew.-% bis kleiner oder gleich 3,0 Gew.-%; und
   - Vanadium in einem Bereich von größer oder gleich 0 Gew.-% bis kleiner oder gleich 0,8 Gew.-%, wobei
der Rest durch Eisen und durch unvermeidliche Verunreinigungen gebildet ist.

Mit Bezug auf Verfahrensschritt b) kann es vorgesehen sein, dass ein Homogenisieren erfolgt, wenn der in Verfahrensschritt a) bereitgestellte Werkstoff noch keiner Homogenisierung unterzogen wurde. Dieser Schritt kann dem Erzeugen besonders einheitlicher und somit definierter Eigenschaften innerhalb des Werkstoffs und somit weiterhin des erzeugten Bauteils dienen.

Weiterhin kann es vorgesehen sein, dass Verfahrensschritt b) durchgeführt wird, indem der Werkstoff einer Temperaturbehandlung unterzogen wird mit einer Temperatur in einem Bereich von größer oder gleich 850°C bis kleiner oder gleich 1000°C.

Durch ein vorstehend beschriebenes Verfahren kann auf vorteilhafte Weise ein Werkstoff erzeugt werden, welcher zur Herstellung von Bauteilen dient, die auch für lange Zeit und bei hohen Drücken in Kontakt mit Wasserstoff stabil sind. Denn durch das hier beschriebene Verfahren lassen sich insbesondere durch herkömmliche und dem Fachmann wohlbekannte Stahlverarbeitungsprozesse Bauteile ausbilden, die eine hohe mechanische Stabilität vereinen mit einer guten Resistenz gegen Wasserstoffeinwirkungen.

## Patentansprüche

1. Verwendung eines Bauteils zum Herstellen eines Brennstoffzellensystems, wobei das Bauteil wenigstens eine Oberfläche aufweist, die dazu vorgesehen ist, mit einer Wasserstoffatmosphäre in Kontakt zu kommen, wobei zumindest diese Oberfläche aus Stahl ausgebildet ist, wobei der Stahl eine Gefügestruktur aufweist, die Austenit und Ferrit umfasst, wobei ein austenitischer Gefügeanteil in einem Bereich von größer oder gleich 1 Gew.-% bis kleiner oder gleich 50 Gew.-%, vorliegt, und wobei ein ferritischer Gefügeanteil in einem Bereich von größer oder gleich 50 Gew.-% bis kleiner oder gleich 99 Gew.-% vorliegt, wobei der Stahl als Legierung ausgestaltet ist, welche die folgenden Bestandteile aufweist:
- Kohlenstoff in einem Bereich von größer oder gleich 0,3 Gew.-% bis kleiner oder gleich 2,0 Gew.-%;
- Silizium in einem Bereich von größer oder gleich 0,5 Gew.-% bis kleiner oder gleich 5,0 Gew.-%;
- Mangan in einem Bereich von größer oder gleich 0,25 Gew.-% bis kleiner oder gleich 4,0 Gew.-%;
- Chrom in einem Bereich von größer oder gleich 0,2 Gew.-% bis kleiner oder gleich 4,0 Gew.-%;
- Molybdän in einem Bereich von größer oder gleich 0 Gew.-% bis kleiner oder gleich 3,0 Gew.-%; und
- Vanadium in einem Bereich von größer oder gleich 0 Gew.-% bis kleiner oder gleich 0,8 Gew.-%;
wobei der Rest durch Eisen und durch unvermeidliche Verunreinigungen gebildet ist.

2. Verwendung nach Anspruch 1, **dadurch gekennzeichnet, dass** ein austenitischer Gefügeanteil in einem Bereich von größer oder gleich 3 Gew.-% bis kleiner oder gleich 15 Gew.-% vorliegt und dass ein ferritischer Gefügeanteil in einem Bereich von größer oder gleich 85 Gew.-% bis kleiner oder gleich 97 Gew.-% vorliegt.

3. Verwendung nach Anspruch 1, **dadurch gekennzeichnet, dass** der Stahl als Legierung ausgestaltet ist, welche die folgenden Bestandteile aufweist:
- Kohlenstoff in einem Bereich von größer oder gleich 0,5 Gew.-% bis kleiner oder gleich 1,1 Gew.-%;
- Silizium in einem Bereich von größer oder gleich 1,5 Gew.-% bis kleiner oder gleich 3,0 Gew.-%;
- Mangan in einem Bereich von größer oder gleich 0,7 Gew.-% bis kleiner oder gleich 1,4 Gew.-%;
- Chrom in einem Bereich von größer oder gleich 0,4 Gew.-% bis kleiner oder gleich 2,5 Gew.-%;
- Molybdän in einem Bereich von größer oder gleich 0 Gew.-% bis kleiner oder gleich 0,15 Gew.-%; wobei
der Rest durch Eisen und durch unvermeidliche Verunreinigungen gebildet ist.

4. Verwendung nach Anspruch 1, wobei ein Verfahren zum Herstellen des Bauteils die Verfahrensschritte aufweist:
a) Bereitstellen eines Werkstoffs aufweisend einen Stahl, der Silizium in einem Gehalt von größer oder gleich 0,5 Gew.-% bis kleiner oder gleich 5,0 Gew.-% aufweist und der Kohlenstoff in einem Gehalt von größer oder gleich 0,3 Gew.-% bis kleiner oder gleich 2,0 Gew.-% aufweist;
b) gegebenenfalls Durchführen einer Homogenisierung des Werkstoffs; und
c) Bainitisieren des gegebenenfalls homogenisierten Werkstoffs, indem der Werkstoff einer Temperaturbehandlung in einem Bereich von größer oder gleich 190°C bis kleiner oder gleich 300°C für einen Zeitraum von wenigstens einer Woche unterworfen wird.

5. Verwendung nach Anspruch 4, **dadurch gekennzeichnet, dass** Verfahrensschritt b) durchgeführt wird, indem der Werkstoff einer Temperaturbehandlung unterzogen wird mit einer Temperatur in einem Bereich von größer oder gleich 850°C bis kleiner oder gleich 1000°C.

## Claims

1. Use of a component for production of a fuel cell system, wherein the component has at least one surface intended to come into contact with a hydrogen atmosphere, wherein at least this surface is formed from steel, wherein the steel has a microstructure comprising austenite and ferrite, wherein an austenitic microstructure component is present within a range from not less than 1% by weight to not more than 50% by weight, and wherein a ferritic microstructure component is present within a range from not less than 50% by weight to not more than 99% by weight, wherein the steel is configured as an alloy having the following constituents:
- carbon within a range from not less than 0.3% by weight to not more than 2.0% by weight;
- silicon within a range from not less than 0.5% by weight to not more than 5.0% by weight;
- manganese within a range from not less than 0.25% by weight to not more than 4.0% by weight;
- chromium within a range from not less than 0.2% by weight to not more than 4.0% by weight;
- molybdenum within a range from not less than 0% by weight to not more than 3.0% by weight; and
- vanadium within a range from not less than 0% by weight to not more than 0.8% by weight;
wherein the balance is formed by iron and unavoidable impurities.

2. Use according to Claim 1, **characterized in that** an austenitic microstructure component is present within a range from not less than 3% by weight to not more than 15% by weight and **in that** a ferritic microstructure component is present within a range from not less than 85% by weight to not more than 97% by weight.

3. Use according to Claim 1, **characterized in that** the steel is configured as an alloy having the following constituents:
- carbon within a range from not less than 0.5% by weight to not more than 1.1% by weight;
- silicon within a range from not less than 1.5% by weight to not more than 3.0% by weight;
- manganese within a range from not less than 0.7% by weight to not more than 1.4% by weight;
- chromium within a range from not less than 0.4% by weight to not more than 2.5% by weight;
- molybdenum within a range from not less than 0% by weight to not more than 0.15% by weight; wherein the balance is formed by iron and unavoidable impurities.

4. Use according to Claim 1, wherein a process for producing the component comprises the following process steps:
a) providing a material comprising a steel including silicon in a content of not less than 0.5% by weight to not more than 5.0% by weight and carbon in a content of not less than 0.3% by weight to not more than 2.0% by weight;
b) optionally performing a homogenization of the material; and
c) bainitizing the optionally homogenized material by subjecting the material to a thermal treatment within a range from not less than 190°C to not more than 300°C for a period of at least one week.

5. Use according to Claim 4, **characterized in that** process step b) is conducted by subjecting the material to a thermal treatment at a temperature within a range from not less than 850°C to not more than 1000°C.

## Revendications

1. Utilisation d'un élément pour la fabrication d'un système de pile à combustible, l'élément présentant au moins une surface qui est prévue pour entrer en contact avec une atmosphère d'hydrogène,
au moins cette surface étant formée d'acier, l'acier présentant une microstructure qui comprend de l'austénite et de la ferrite, une proportion de structure austénitique étant présente dans une plage supérieure ou égale à 1 % en poids à inférieure ou égale à 50 % en poids, et une proportion de structure ferritique étant présente dans une plage supérieure ou égale à 50 % en poids et inférieure ou égale à 99 % en poids, l'acier étant réalisé comme alliage, qui présente les ingrédients suivants :
- du carbone dans une plage supérieure ou égale à 0,3 % en poids et inférieure ou égale à 2,0 % en poids ;
- du silicium dans une plage supérieure ou égale à 0,5 % en poids et inférieure ou égale à 5,0 % en poids ;
- du manganèse dans une plage supérieure ou égale à 0,25 % en poids et inférieure ou égale à 4,0 % en poids ;
- du chrome dans une plage supérieure ou égale à 0,2 % en poids et inférieure ou égale à 4,0 % en poids ;
- du molybdène dans une plage supérieure ou égale à 0 % en poids et inférieure ou égale à 3,0 % en poids ;
- du vanadium dans une plage supérieure ou égale à 0 % en poids et inférieure ou égale à 0,8 % en poids ;
le reste étant formé par du fer et par des impuretés inévitables.

2. Utilisation selon la revendication 1, **caractérisée en ce qu'**une proportion de structure austénitique est présente dans une plage supérieure ou égale à 3 % en poids et inférieure ou égale à 15 % en poids, et **en ce qu'**une proportion de structure ferritique est présente dans une plage supérieure ou égale à 85 % en poids et inférieure ou égale à 97 % en poids.

3. Utilisation selon la revendication 1, **caractérisée en ce que** l'acier est réalisé comme alliage, qui présente les ingrédients suivants :
- du carbone dans une plage supérieure ou égale à 0,5 % en poids et inférieure ou égale à 1,1 % en poids ;
- du silicium dans une plage supérieure ou égale à 1,5 % en poids et inférieure ou égale à 3,0 % en poids ;
- du manganèse dans une plage supérieure ou égale à 0,7 % en poids et inférieure ou égale à 1,4 % en poids ;
- du chrome dans une plage supérieure ou égale à 0,4 % en poids et inférieure ou égale à 2,5 % en poids ;
- du molybdène dans une plage supérieure ou égale à 0 % en poids et inférieure ou égale à 0,15 % en poids ;
le reste étant formé par du fer et par des impuretés inévitables.

4. Utilisation selon la revendication 1, un procédé pour la fabrication de l'élément présentant les étapes de procédé de :
a) mise à disposition d'un matériau présentant un acier, qui comprend du silicium en une teneur supérieure ou égale à 0,5 % en poids et inférieure ou égale à 5,0 % en poids et qui comprend du carbone en une teneur supérieure ou égale à 0,3 % en poids et inférieure ou égale à 2,0 % en poids;
b) éventuellement, réalisation d'une homogénéisation du matériau ; et
c) bainitation du matériau éventuellement homogénéisé, où le matériau est soumis à un traitement en température dans une plage supérieure ou égale à 190 °C et inférieure ou égale à 300 °C pendant une durée d'au moins une semaine.

5. Utilisation selon la revendication 4, **caractérisée en ce que** l'étape de procédé b) est réalisée, en soumettant le matériau à un traitement en température à une température dans une plage supérieure ou égale à 850 °C et inférieure ou égale à 1 000 °C.
